# FASCICULE DE BREVET EUROPEEN

(11) **EP 0 880 474 B1**
(45) Date de publication et mention de la délivrance du brevet: **20.10.1999**
(21) Numéro de dépôt: 97903435.2
(22) Date de dépôt: 10.02.1997
(51) Int. Cl.: C02F 3/12, C02F 3/30

(54) **REACTEUR POUR L'ELIMINATION BIOLOGIQUE DE LA POLLUTION ORGANIQUE DES EAUX**
REAKTOR ZUR BIOLOGISCHEN ENTFERNUNG DER ORGANISCHEN VERSCHMUTZUNG AUS WASSER
REACTOR FOR BIOLOGICALLY REMOVING ORGANIC POLLUTANTS FROM WATER

(30) Priorité: 16.02.1996 FR 9601963
(43) Date de publication de la demande: 02.12.1998
(73) Titulaire: DEGREMONT, 92508 Rueil-Malmaison Cédex (FR)
(72) Inventeur: PANNIER, Michèle, F-13100 SAINT MARC JAUMEGARDE (FR); TRUC, Alain, F-92300 Levallois-Perret (FR); VION, Patrick, F-78800 Houilles (FR)
(74) Mandataire: Armengaud Ainé, Alain
(86) Numéro de dépôt international: FR9700260
(87) Numéro de publication internationale: WO9729998

(56) Documents cités:
- EP-A- 0 010 571
- EP-A- 0 154 334
- WO-A-93/25485
- PATENT ABSTRACTS OF JAPAN vol. 009, no. 271 (C-311), 29 Octobre 1985 & JP 60 122095 A (EBARA INFILCO KK), 29 Juin 1985, cité dans la demande
- PATENT ABSTRACTS OF JAPAN vol. 012, no. 148 (C-493), 7 Mai 1988 & JP 62 262795 A (HITACHI ZOSEN CORP;OTHERS: 01), 14 Novembre 1987,
- PATENT ABSTRACTS OF JAPAN vol. 011, no. 063 (C-406), 26 Février 1987 & JP 61 222595 A (ATAKA KOGYO KK), 3 Octobre 1986,

## Description

La présente invention est relative à un réacteur du type à cultures mixtes destiné à l'élimination biologique de la pollution organique des eaux ainsi qu'à l'élimination biologique des nitrates par voie anoxique.

Avant d'expliciter l'invention, il convient de rappeler un certain nombre de définitions et notamment celles du terme 〈〈 cultures mixtes 〉〉 par rapport aux boues activées et aux cultures fixées :
- boues activées : la biomasse est libre, en suspension dans un bassin aéré ou non;
- cultures fixées : la biomasse est fixée sur un support solide, et l'aspect général de l'équipement est le plus souvent comparable à un filtre;
- cultures mixtes : la biomasse est accrochée sur des particules supports, formant ainsi ce qui sera appelé ci-après des bioparticules qui sont maintenues en suspension dans le flux d'eau à traiter.

Par ailleurs, les cultures fixées assurent une fonction 〈〈 sélection et enrichissement de la biomasse en bactéries spécifiques aux conditions de traitement, notamment les bactéries hétérotrophes dénitrifiantes dans le cas des réacteurs de dénitrication biologique 〉〉, caractéristique avantageusement reprise dans le cas des cultures mixtes.

On connaît des dispositifs permettant de réaliser des traitements biologiques d'effluents. Parmi ces dispositifs, il en existe qui mettent en oeuvre des circulations induites des effluents par 〈〈 air lift 〉〉 ou 〈〈 gaz lift 〉〉. A titre d'exemple de cet état antérieur de la technique, on peut citer notamment WO-A 93 25485, JP-A 60-122095, EP-0010571. De tels systèmes ne peuvent pas être utilisés pour réaliser une dénitrification, c'est-à-dire des traitements par voie anoxique ou anaérobie. Ils sont en outre impossibles à mettre en oeuvre lorsque l'on veut réaliser des traitements à l'aide de cultures mixtes étant donné que les systèmes de circulation à 〈〈 air lift 〉〉 ou 〈〈 gaz lift 〉〉 présentent l'inconvénient majeur de décrocher les cultures des supports sur lesquels elles sont fixées.

On connaît par ailleurs déjà des dispositifs permettant de réaliser une dénitrification des effluents à l'aide de bactéries réduisant l'azote nitrique à un état plus faible d'oxydation. Ces dispositifs connus sont notamment les suivants :
- les réacteurs biologiques à boues activées;
- les réacteurs à cultures fixées, à lits granulaires et à lits à ruissellement.

Ces dispositifs connus présentent l'inconvénient :
- pour les réacteurs à boues activées d'être volumineux ;
- pour les réacteurs à cultures fixées de requérir des équipements complémentaires, en particulier pour assurer le maintien des conditions hydrauliques (lavages, détassages, etc...), et d'être consommateurs d'énergie.

L'invention s'est fixé pour obiectif de créer un réacteur plus compact que ceux des systèmes à boues activées, économique tant en coûts d'équipement que de fonctionnement et permettant d'assurer dans les meilleures conditions l'élimination biologique de la pollution notamment azotée.

A cet effet, la présente invention a pour objet un réacteur du type à cultures mixtes destiné à l'élimination biologique de la pollution organique des eaux ainsi qu'à l'élimination biologique des nitrates par voie anoxique caractérisé en ce qu'il comprend : - un réacteur central agité, alimenté en eau brute dans sa partie basse et dans lequel s'effectue le traitement biologique, qui contient une suspension d'une biomasse fixée, à faible concentration, de l'ordre de quelques grammes par litre, ledit réacteur agité comportant au moins une hélice positionnée dans une gaine interne et coaxiale audit réacteur, pour assurer la circulation de l'eau à traiter, cette dernière circulant selon un courant ascendant ou descendant dans ladite gaine et dans le sens inverse descendant ou ascendant, à l'extérieur de celle-ci et selon une vitesse qui est choisie de manière que les bioparticules restent en suspension dans ledit réacteur agité et,

- une zone de dégagement extérieure audit réacteur central agité et communiquant de préférence avec la partie inférieure de ce dernier, l'eau traitée dans ce réacteur agité s'échappant par ladite zone de dégagement, à la partie supérieure de celle-ci, selon un courant ascendant avec une vitesse telle que d'une part la vitesse de décantation des bioparticules est supérieure à la vitesse de l'eau et d'autre part, la vitesse de décantation de la biomasse en excès produite par les réactions biologiques notamment de dénitrification, est inférieure à la vitesse de l'eau.

- des moyens pour augmenter la zone réactive à la partie inférieure de la zone de dégagement.

Selon un mode de réalisation de l'invention, l'eau à traiter est introduite dans la gaine, par exemple à la partie inférieure de celle-ci, et le courant de l'eau circulant dans cette gaine s'effectue dans le sens ascendant puis dans le sens descendant à l'extérieur de celle-ci.

Selon un autre mode de réalisation de l'invention, l'eau à traiter est introduite entre la gaine et la paroi interne dudit réacteur, sa circulation s'effectuant dans le sens ascendant à l'extérieur de ladite gaine et dans le sens descendant à l'intérieur de celle-ci.

Selon l'invention, la biomasse active contenue dans ledit réacteur est essentiellement fixée sur des particules, de préférence minérales de faible granulométrie, c'est-à-dire comprise entre 50 et 500 microns, de préférence 100 à 300 microns.

Selon la présente invention, la concentration des bioparticules en suspension dans ledit réacteur ajouté est de l'ordre de 5 à 100 grammes de bioparticules par litre (matériau support + biomasse fixée) et de préférence de 10 à 40 grammes par litre.

Selon l'invention, le support de la biomasse peut être constitué par un matériau de densité supérieure à 1, organique ou minéral, de préférence de la famille des silicoaluminates, notamment une argile kaolinique, ou par du sable fin.

Selon l'invention, les moyens prévus pour augmenter la zone réactive à la partie inférieure de la zone de dégagement consistent en des déflecteurs augmentant la zone de contact entre l'eau à traiter et les bioparticules et assurant un maintien des bioparticules dans cette zone.

D'autres caractéristiques et avantages de la présente invention ressortiront de la description faite ci-après en référence aux dessins annexés qui en illustrent des exemples de réalisation dépourvus de tout caractère limitatif.

Sur les dessins :
- La figure 1 est une vue schématique en coupe axiale verticale du mode de réalisation général d'un réacteur selon l'invention et,
- La figure 2 est une vue similaire à la figure 1 d'un exemple de réalisation préféré du réacteur de l'invention.
- La figure 3 est une vue similaire aux figures 1 et 2 illustrant une variante du réacteur selon l'invention.
- La figure 4 est une vue similaire aux figures 1 à 3 illustrant une variante du réacteur selon l'invention intégrant des systèmes du type déflecteurs.
- La figure 5 est une vue en plan illustrant une variante d'un réacteur selon l'invention réalisée sous la forme d'une enceinte parallélépipédique comportant une pluralité d'hélices positionnées dans la partie centrale du réacteur.
- La figure 6 illustre encore une autre variante du réacteur selon l'invention.

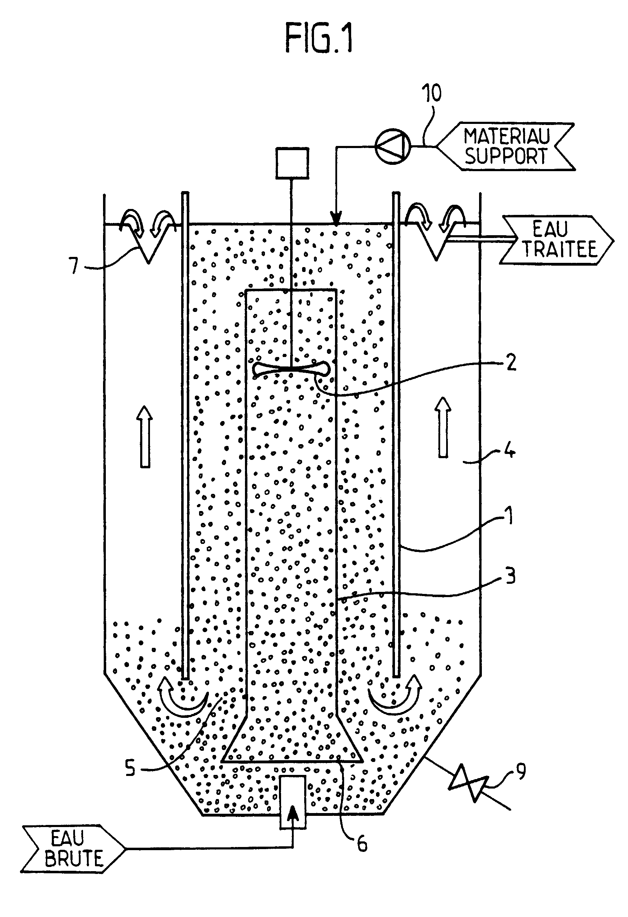

En se référant aux figures et notamment aux figures 1 à 3, on voit que, dans ces exemples de réalisation, le réacteur selon la présente invention comporte deux parties :
- un réacteur central agité 1 dans lequel est positionnée une gaine 3 recevant une hélice 2 à sa partie supérieure, cette hélice étant entraînée par tout moteur approprié. L'eau à traiter circule selon un courant ascendant, ou descendant, dans ladite gaine et dans le sens inverse, descendant ou ascendant à l'extérieur de cette gaine. L'eau est éventuellement additionnée d'un substrat carboné par exemple du méthanol, de l'éthanol, etc...;
- une zone de dégagement, 4 extérieure au réacteur central 1, communiquant avec ce dernier par sa partie inférieure 5, l'eau traitée dans ce réacteur s'échappant par cette zone de dégagement, à la partie supérieure de celle-ci.

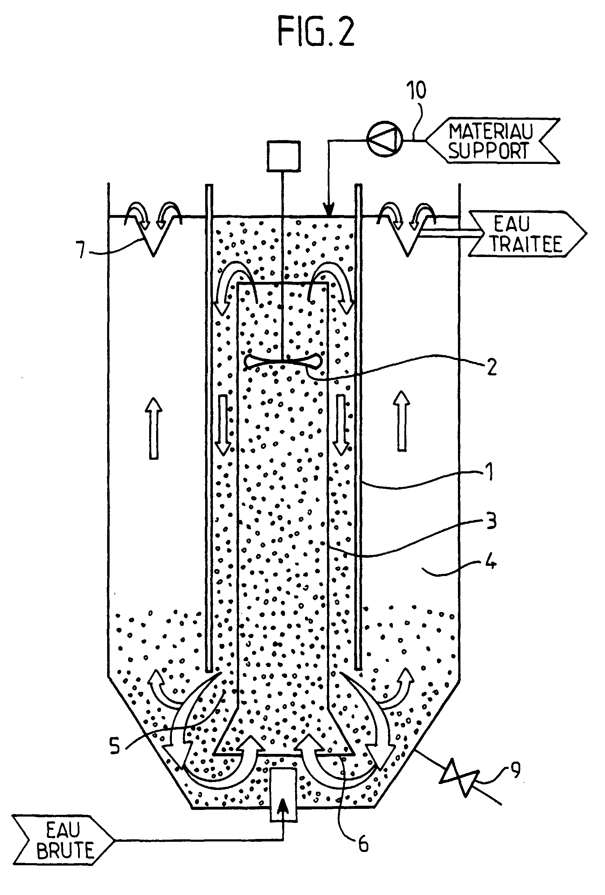

Dans l'exemple de réalisation illustré par la figure 2, l'eau brute à traiter est introduite dans la gaine 3, de préférence à sa partie inférieure 6. L'eau circule dans la gaine selon un mouvement ascendant et, selon un mouvement descendant à l'extérieur de la gaine. L'eau provenant du réacteur agité 1 s'échappe au travers de la zone de dégagement 4 selon un courant ascendant afin d'être recueillie dans des goulottes telles que 7 disposées à la partie supérieure du réacteur selon l'invention.

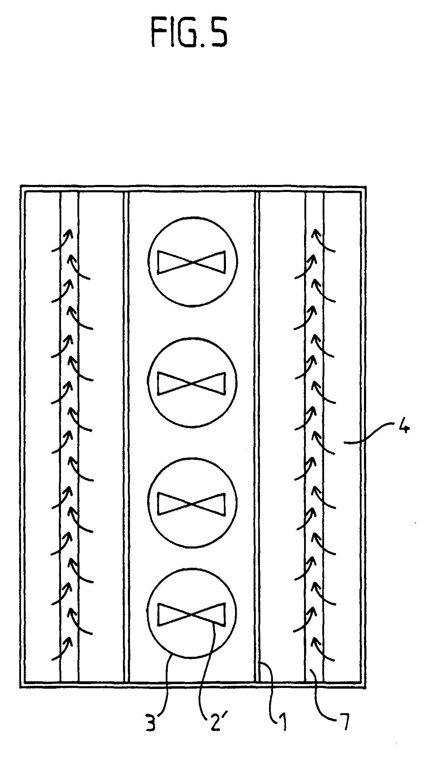

Dans l'exemple de réalisation illustré par les figures 1 et 2, le réacteur est de forme cylindrique à axe vertical et le réacteur agité 1 est coaxial au réacteur proprement dit. On peut bien entendu, sans sortir du cadre de l'invention envisager toute autre forme. Ainsi le réacteur peut se présenter sous la forme d'une enceinte ou d'un canal parallélépipédique allongé comportant en son centre le réacteur agité, muni d'une ou de plusieurs hélices gainées, se présentant également sous la forme d'une enceinte parallélépipédique disposée selon son axe longitudinal. Dans cette variante illustrée par la figure 5, la figure 1 du dessin annexé constitue une section droite d'un tel réacteur. On voit que dans ce cas, il est prévu une pluralité d'hélices gainées telles que 2'.

Le dispositif comporte en outre un système de purge 9 destiné à assurer la déconcentration ou l'ajustement de la concentration, de façon éventuelle ou systèmatique, des bioparticules contenues dans le réacteur 1, ainsi que la vidange de ce réacteur et l'élimination des particules lourdes. On prévoit également un moyen 10 de recharge en matériau support (argile ou autre).

Le réacteur selon l'invention contient une biomasse active, à faible concentration, c'est-à-dire de l'ordre de 5 à 100 grammes par litre, et de préférence 10 à 40 grammes par litre qui est fixée sur des particules minérales de faible granulométrie, c'est-à-dire de l'ordre de 50 à 500 microns et de préférence 100 à 300 microns. Le matériau utilisé comme support de la biomasse peut être avantageusement un minéral de la famille des silico-aluminates (par exemple une argile kaolinique) ou un sable fin.

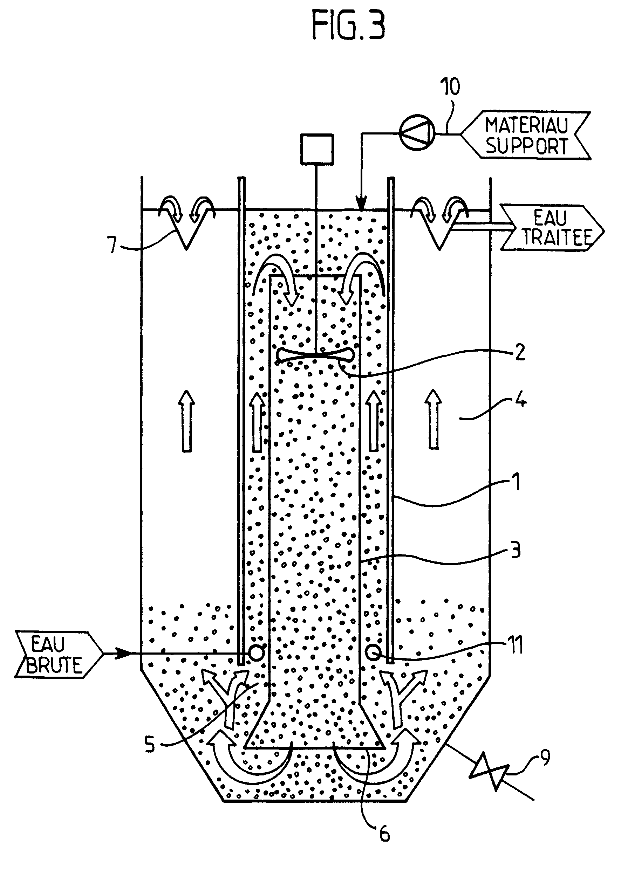

L'hélice gainée 2 maintient en mouvement l'eau qui est contenue dans le réacteur agité : dans l'exemple de réalisation illustré par la figure 2 son sens de rotation est tel qu'elle fait circuler cette eau selon un mouvement ascendant dans la gaine 3 et selon un mouvement descendant à l'extérieur de cette gaine, entre cette dernière et la paroi du réacteur agité 1. Dans la variante représentée sur la figure 3, son sens de rotation est tel que l'eau circule selon un mouvement ascendant à l'extérieur de la gaine et descendant dans celle-ci. Dans cette variante, l'alimentation en eau à traiter s'effectue par l'intermédiaire d'un système torique représenté schématiquement en 11. Les vitesses de l'eau sont telles que les bioparticules restent en suspension dans le réacteur agité 1 et c'est dans ce réacteur que s'effectue l'élimination biologique de la pollution, par exemple la dénitrification biologique.

L'hélice gainée a également pour fonction d'apporter une énergie d'agitation dont l'effet est de imiter, par cisaillement, la quantité de biomasse fixée sur les bioparticules.

A sa sortie du réacteur agité 1 l'eau s'échappe par la partie inférieure 5 de ce réacteur vers la zone de dégagement 4 dans laquelle elle est entraînée selon un courant ascendant. Sur les figures 2 et 3, les flèches indiquent clairement les sens de circulation de l'eau depuis son introduction à la base 6 du réacteur agité 1 jusqu'à son évacuation, après traitement, dans des goulottes 7 disposées à la partie supérieure de la zone de dégagement 4. Dans cette zone de dégagement, la vitesse de l'eau est telle que :
- les bioparticules ne sont pas entraînées par l'eau traitée : la vitesse de décantation des bioparticules est supérieure à la vitesse de l'eau et,
- la biomasse en excès, c'est-à-dire les particules de biomasse produites par les réactions biologiques et qui sont arrachées par l'effet de cisaillement de l'hélice 2 ainsi qu'on l'a indiqué ci-dessus, sont entraînées par l'eau traitée : la vitesse de décantation de ces particules de biomasse en excès est inférieure à la vitesse de l'eau.

Ainsi, et selon l'invention, l'adéquation mutuelle du réacteur et des bioparticules (densité et granulométrie) ainsi que les vitesses de l'eau permettent de maintenir les bioparticules en suspension dans la zone agitée 1 et de ne pas les entraîner dans la zone de dégagement 4, tout en maintenant une biomasse stable grâce à l'élimination de la biomasse en excès par l'effet de cisaillement de l'hélice 2.

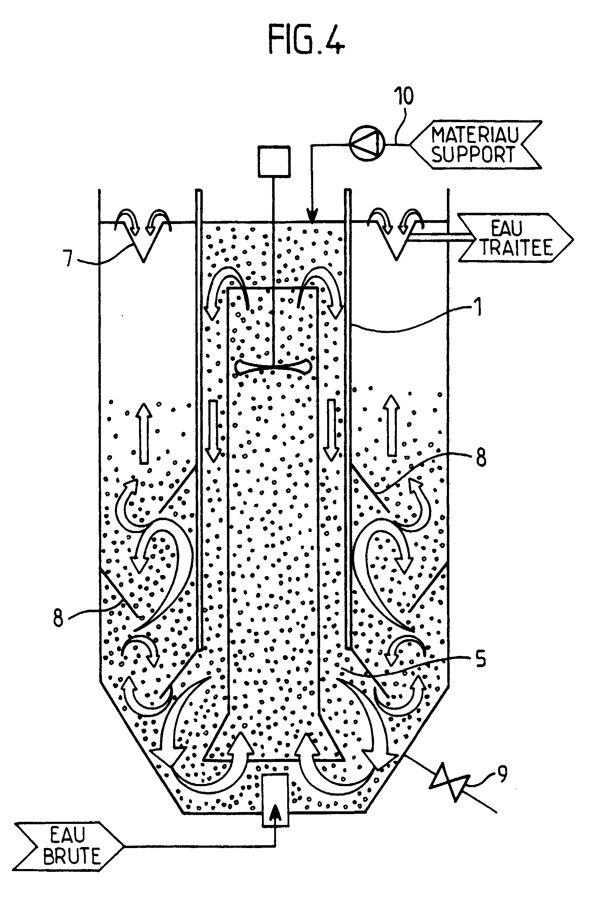

Sur la figure 4, on a représenté le réacteur selon les figures 1 à 3 avec ses moyens permettant d'augmenter la zone réactive à la partie inférieure 5 de la zone de dégagement 4. Dans l'exemple de réalisation non limitatif illustré par cette figure 4, on prévoit dans cette zone réactive des moyens du type déflecteurs représentés schématiquement en 8. Bien entendu, on peut utiliser tout autre moyen équivalent.

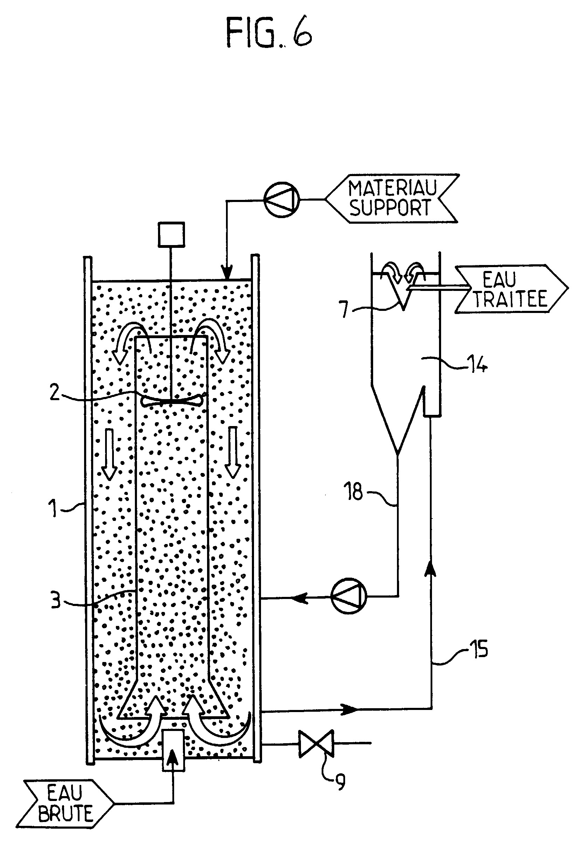

La figure 6 illustre une autre variante du réacteur selon l'invention.

Sur la figure 6, on voit que dans ce cas, la zone de dégagement 14 est séparée du réacteur agité et elle communique avec ce dernier par l'intermédiaire d'une conduite 15. Dans cette variante, les particules entraînées dans la zone de dégagement externe 14 sont ramenées dans le réacteur par l'intermédiaire d'une conduite 18.

Le réacteur selon la présente invention peut s'appliquer en particulier à la dénitrification des eaux résiduaires urbaines c'est-à-dire :
- a une pré-dénitrification : mélange d'eau brute et d'eau nitrifiée recirculée (le carbone nécessaire est trouvé dans la pollution carbonée de l'eau brute) ;
- à une post-dénitrification : eau nitrifiée additionnée d'un substrat carboné (méthanol, éthanol , etc).

On peut également utiliser le réacteur selon l'invention dans la dénitrification des eaux potables et également pour effectuer toute réaction biologique anoxie, anaérobie ou aérobie.

Parmi les avantages apportés par la présente invention vis-à-vis des techniques existantes rappelées ci-dessus, on peut citer notamment les suivants :
- par rapport aux dispositifs classiques par boues activées, l'invention permet d'obtenir une augmentation des charges volumiques appliquées, ce qui se traduit par une compacité des ouvrages apportant un grand nombre d'avantages parmi lesquels : insertion facilitée, couvertures plus aisées, élimination des odeurs, etc...
- au regard des solutions classiques par cultures fixées du type biofiltres, l'invention apporte une diminution des coûts des équipements tant en ce qui concerne les investissements que les frais de fonctionnement ;
- par rapport aux réacteurs à cultures fixées du type lits fluidisés, l'invention, grâce à une faible concentration en bioparticules apporte les avantages suivants :
- diminution des coûts des équipements et réduction des consommations énergétiques ;
- maîtrise des séquences d'arrêt/démarrage (faibles volumes de dépôt, facilité de remise en suspension) et
- abrasion limitée (concentration faible de particules de petite taille dont l'abrasivité est en outre amoindrie par l'enrobage biologique).

## Revendications

1. Réacteur du type à cultures mixtes destiné à l'élimination biologique de la pollution organique des eaux ainsi qu'à l'élimination biologique des nitrates par voie anoxique caractérisé en ce qu'il comprend :
- un réacteur central agité (1), alimenté en eau brute dans sa partie basse et dans lequel s'effectue le traitement biologique, qui contient une suspension d'une biomasse fixée, à faible concentration, de l'ordre de quelques grammes par litre, ledit réacteur agité comportant au moins une hélice (2) positionnée dans une gaine (3) interne et coaxiale audit réacteur, pour assurer la circulation de l'eau à traiter, cette dernière circulant selon un courant ascendant ou descendant dans ladite gaine et dans le sens inverse, descendant ou ascendant à l'extérieur de celle-ci et selon une vitesse qui est choisie de manière que les bioparticules restent en suspension dans ledit réacteur agité et,
- une zone de dégagement (4) extérieure audit réacteur central agité (1) et communiquant avec la partie inférieure (5) de ce dernier, l'eau traitée dans ce réacteur agité s'échappant par ladite zone de dégagement, à la partie supérieure de celle-ci, selon un courant ascendant avec une vitesse telle que, d'une part, la vitesse de décantation des bioparticules est supérieure à la vitesse de l'eau et d'autre part, la vitesse de décantation de la biomasse en excès produite par les réactions biologiques notamment de dénitrification, est inférieure à la vitesse de l'eau.
- des moyens pour augmenter la zone réactive à la partie inférieure (5) de la zone de dégagement.

2. Réacteur selon la revendication 1 caractérisé en ce que l'eau à traiter est introduite dans la partie basse de la gaine (3) et elle circule selon un courant ascendant dans ladite gaine et selon un courant descendant à l'extérieur de celle-ci.

3. Réacteur selon la revendication 1 caractérisé en ce que l'eau à traiter est introduite entre ladite gaine (3) et les parois internes dudit réacteur (1) et elle circule selon un courant ascendant à l'extérieur de ladite gaine et selon un courant descendant à l'intérieur de celle-ci.

4. Réacteur selon l'une quelconque des revendications précédentes caractérisé en ce qu'il est de forme cylindrique à axe vertical, le réacteur central agité (1) ainsi que la gaine (3) recevant l'hélice (2) étant également cylindriques et coaxiaux audit réacteur.

5. Réacteur selon l'une quelconque des revendications précédentes caractérisé en ce que la biomasse qu'il contient est fixée sur des particules de densité supérieure à 1, de faible granulométrie, de l'ordre de 50 à 500 microns et de préférence de l'ordre de 100 à 300 microns.

6. Réacteur selon l'une quelconque des revendications précédentes caractérisé en ce que la concentration des bioparticules en suspension dans le réacteur (1) est de l'ordre de 5 à 100 grammes par litre et de préférence de l'ordre de 10 à 40 grammes par litre.

7. Réacteur selon la revendication 5 caractérisé en ce que le support de la biomasse est constitué par un matériau organique ou minéral, notamment de la famille des silico-aluminates et plus particulièrement une argile kaolinique.

8. Réacteur selon la revendication 5 caractérisé en ce que le support de la biomasse est constitué par du sable fin.

9. Réacteur selon l'une quelconque des revendications précédentes caractérisé en ce qu'il comporte des déflecteurs (8) positionnés à la partie inférieure (5) de ladite zone de dégagement (4) ainsi que dans cette dernière.

10. Réacteur selon l'une quelconque des revendications 1 à 9 caractérisé en ce que la zone de dégagement (14) est séparée du réacteur agité (1), et elle communique avec ce dernier par l'intermédiaire d'une conduite (15).

## Claims

1. Reactor of the mixed culture type far the biological elimination of organic pollution in waters, as well as the biological elimination of nitrates anoxically, characterized in that it comprises:
- a stirred, central reactor (1), supplied in its lower part with untreated water and in which the biological treatment takes place and which contains a suspension of a fixed biomass in low concentration of a few grams per litre, said stirred reactor incorporating at least one propeller located in an internal shaft (3) coaxial to said reactor for ensuring the circulation of the water to be treated, the latter circulating in a rising or falling flow in said shaft and in the opposite falling or rising direction outside the same and at a rate chosen in such a way that the bioparticles remain suspended in said stirred reactor,
- a release zone (4) outside said stirred, central reactor (1) and communicating with the lower part (5) of the latter, the water treated in said stirred reactor being discharged via said release zone, in the upper part thereof, in accordance with a rising flow and at a rate such that on the one hand the decantation speed of the bioparticles exceeds the speed of the water and on the other the decantation speed of the excess biomass produced by the biological reactions and in particular denitrification is lower than the speed of the water and
- means for augmenting the reactive zone in the lower part (5) of the release zone.

2. Reactor according to claim 1, characterized in that the water to be treated is introduced into the lower part of the shaft (3) and circulates in accordance with a rising flow in said shaft and in a falling flow outside the latter.

3. Reactor according to claim 1, characterized in that the water to be treated is introduced between said shaft (3) and the inner walls of said reactor (1) and it circulates in accordance with a rising flow outside said shaft and in accordance with a falling flow within the latter.

4. Reactor according to any one of the preceding claims, characterized in that it is cylindrical with a vertical axis, the stirred, central reactor (1) and the shaft (3) receiving the propeller (2) also being cylindrical and coaxial to said reactor.

5. Reactor according to any one of the preceding claims, characterized in that the biomass which it contains is fixed to particles having a density higher than 1, with a small grain size, approximately 50 to 500 microns and preferably approximately 100 to 300 microns.

6. Reactor according to any one of the preceding claims, characterized in that the concentration of bioparticles in suspension in the reactor (1) is approximately 5 to 100 and preferably approximately 10 to 40 grams per litre.

7. Reactor according to claim 5, characterized in that the biomass support is constituted by a mineral or organic material, particularly from the family of aluminosilicates and more particularly kaolin.

8. Reactor according to claim 5, characterized in that the biomass support is constituted by fine sand.

9. Reactor according to any one of the preceding claims, characterized in that it has deflectors (8) positioned in the lower part (5) of said release zone (4), as well as in the latter.

10. Reactor according to any one of the preceding claims, characterized in that the release zone (14) is separated from the stirred reactor (1) and communicates with the latter by means of a pipe (15).

## Patentansprüche

1. Reaktor für Mischkulturen zur biologischen Beseitigung der organischen Verschmutzung von Wasser ebenso wie zur biologischen Beseitigung von Nitraten ohne Verwendung von Sauerstoff, dadurch **gekennzeichnet**, daß dieser
- einen zentralen Rührreaktor (1) aufweist, der in seinem unteren Abschnitt mit Rohwasser gespeist wird, in dem die biologische Behandlung stattfindet, und der in einer schwachen Konzentration, in der Größenordnung von einigen Gramm pro Liter, eine Suspension einer gebundenen Biomasse enthält, wobei dieser Rührreaktor (1) mindestens eine Propellerschraube (2) aufweist, die in einem in diesem Reaktor innenliegenden und hierzu koaxialen Kanal (3) angeordnet ist, um die Zirkulation des zu behandelnden Wassers sicherzustellen, wobei dieses entlang eines in diesem Kanal entweder in einer aufsteigenden oder absteigenden Strömung zirkuliert und außerhalb von diesem Kanal in umgekehrter Richtung und in einer Geschwindigkeit ab- oder aufströmt, die so gewählt ist, daß im Rührreaktor (1) die Biopartikel in Suspension verbleiben;
- einen außerhalb dieses zentralen Rührreaktors (1) befindlichen Austrittsbereich (4) aufweist, der mit dessen unteren Abschnitt (5) in Verbindung steht, wobei das behandelte Wasser in diesem Rührreaktor (1) über den Austrittsbereich (4) in dessen oberen Abschnitt entlang einer aufsteigenden Strömung mit einer solchen Geschwindigkeit ausströmt, daß einerseits die Geschwindigkeit der Dekantierung der Biopartikel größer ist als die Geschwindigkeit des Wassers und andererseits die Geschwindigkeit der Dekantierung der überschüssigen Biomasse, die durch biologische Reaktionen, wie insbesondere der Denitrifizierung, hervorgerufen wird, kleiner ist als die Geschwindigkeit des Wassers; und
- Mittel zur Erweiterung des reaktiven Bereichs im unteren Abschnitt (5) des Austrittsbereichs (4) aufweist.

2. Reaktor nach Anspruch 1,
dadurch **gekennzeichnet**,
daß das zu behandelnde Wasser im unteren Abschnitt des Kanals (3) eingeleitet wird und in diesem in einer aufsteigenden Strömung und außerhalb dieses Kanals (3) in einer absteigenden Strömung zirkuliert.

3. Reaktor nach Anspruch 1,
dadurch **gekennzeichnet**,
daß das zu behandelnde Wasser zwischen diesem Kanal (3) und den Innenwänden des Reaktors (1) eingeleitet wird und außerhalb dieses Kanals in einer aufsteigenden Strömung und innerhalb dieses Kanals in einer absteigenden Strömung zirkuliert.

4. Reaktor nach einem der vorhergehenden Ansprüche,
dadurch **gekennzeichnet**,
daß dieser in Vertikalrichtung eine zylindrische Gestalt aufweist, wobei der zentrale Rührreaktor (1) ebenso wie der die Propellerschraube (2) aufweisende Kanal (3) zum Reaktor ebenfalls zylindrisch und koaxial ausgebildet sind.

5. Reaktor nach einem der vorhergehenden Ansprüche,
dadurch **gekennzeichnet**,
daß die in diesem enthaltene Biomasse auf Partikeln gebunden ist, die eine Dichte oberhalb von 1 und eine geringe Korngröße in der Größenordnung von 50 bis 500 µm, vorzugsweise jedoch von 100 bis 300 µm, aufweisen.

6. Reaktor nach einem der vorhergehenden Ansprüche,
dadurch **gekennzeichnet**,
daß die Konzentration der im Reaktor (1) in Suspension vorliegenden Biopartikel in der Größenordnung von 5 bis 100 g/l, vorzugsweise von 10 bis 40 g/l, liegt.

7. Reaktor nach Anspruch 5,
dadurch **gekennzeichnet**,
daß das Trägermaterial für die Biomasse aus einem organischen oder mineralischen Material, wie beispielsweise aus der Familie der Aluminiumsilicate und insbesondere aus kaolinhaltigem Ton, besteht.

8. Reaktor nach Anspruch 5,
dadurch **gekennzeichnet**,
daß das Trägermaterial für die Biomasse aus feinem Sand besteht.

9. Reaktor nach einem der vorhergehenden Ansprüche,
dadurch **gekennzeichnet**,
daß dieser Ablenkbleche (8) aufweist, die am unteren Abschnitt (5) des Austrittsbereichs (4) ebenso wie in diesem angeordnet sind.

10. Reaktor nach einem der vorhergehenden Ansprüche,
dadurch **gekennzeichnet**,
daß der Austrittsbereich (14) vom Rührreaktor (1) getrennt ist und mit diesem über eine Rohrleitung (15) in Verbindung steht.
